# FASCICULE DE BREVET EUROPEEN

(11) **EP 0 661 313 B1**
(45) Date de publication et mention de la délivrance du brevet: **25.02.1998**
(21) Numéro de dépôt: 94402939.6
(22) Date de dépôt: 20.12.1994
(51) Int. Cl.: C08F 297/04, C08G 81/02, C08L 53/02

(54) **Copolymère bloc étoilé d'un monomère vinylaromatique et d'un diène conjugué, son procédé d'obtention, et les compositions comprenant ledit copolymère et du polystyrène cristal**
Sternblockcopolymer aus vinylaromatischen Monomer und konjugierten Dien Verfahren zu seiner Herstellung und die Zusammensetzung, die dieses Copolymer und Kristallines enthält
Star block copolymer of vinylaromatic and conjugated diene, process for its manufacture and compositions containing this copolymer and crystal polystyrene

(30) Priorité: 29.12.1993 FR 9315829
(43) Date de publication de la demande: 05.07.1995
(73) Titulaire: ELF ATOCHEM S.A., 92800 Puteaux (FR)
(72) Inventeur: Nicol, Pascal, F-6400O Pau (FR)

(56) Documents cités:
- EP-A- 0 255 001
- EP-A- 0 341 620
- EP-A- 0 436 225
- US-A- 4 248 982

## Description

Le présente invention concerne un nouveau copolymère bloc étoilé d'un monomère vinylaromatique et d'un diène conjugué et son procédé d'obtention. Les compositions comprenant ce copolymère et du polystyrène cristal présentent des propriétés mécaniques et des transparences remarquables.

Le document EP 270 515 décrit des copolymères linéaires de formule générale S₁-B₁-B₂/S₂-S₃ contenant de 60 à 95 % de composé vinylaromatique et de 5 à 40 % de diène. Dans la formule, S₁ et S₃ sont des blocs de polymère vinylaromatique, B₁ est un bloc polydiène et B₂/S₂ est un copolymère bloc statistique de diène conjugué et de vinylaromatique. Ce copolymère présente des propriétés mécaniques satisfaisantes mais ses propriétés optiques sont relativement médiocres puisque l'indice de Haze pour la résine pure ne descend guère en dessous de 6,7 tandis qu'il ne descend guère en dessous de 13,5 lorsqu'il est mélangé à du polystyrène cristal.

Le document US 4,221,884 décrit des copolymères blocs étoilés bimodaux particulièrement résilients aux basses températures de formule générale (S₁-S₂/B₁-B₂)ₘ-X-(B₂-S₂/B₁)ₙ. Dans cette formule, S1 est un bloc non élastomérique, S₂/B₁ est un bloc copolymère d'un composé vinylaromatique et d'un diène conjugué. Dans ce copolymère, le rapport massique de S2 sur B1 est inférieur à 1. B2 est un bloc de polydiène conjugué renfermant 20 à 40 % en poids de la totalité du diène conjugué contenu dans le copolymère bloc étoilé. Ces copolymères présentent des transparences médiocres et sont difficilement mélangeables avec du polystyrène cristal.

Le document EP 255 001 décrit des copolymères blocs étoilés bimodaux contenant de 60 à 90 % en poids d'un monomère vinylaromatique et de 40 à 10 % en poids d'un diène conjugué. Ce copolymère est représenté par la formule générale (S₁-S₂-B₁/S₃-B₂)ₘ-X-(B₂-S₃/B₁-S₂)ₙ dans laquelle S1 et S2 sont des blocs de polymère vinylaromatique, B2 est un bloc de polydiène conjugué contenant jusqu'à 20 % de la totalité des unités diène du copolymère et B1/S3 et S3/B1 sont des blocs de copolymère d'un monomère vinylaromatique et d'un diène conjugué, lesdits blocs de copolymères étant constitués de diène 81 et de monomère vinylaromatique S3 avec un rapport en masse B1 : S3 compris entre 0,8 et 1,2 issues de monomère vinylaromatique. Cependant, ces copolymères présentent des indices de fluidité tellement élevés que leur mélange avec du polystyrène cristal est difficilement envisageable.

II a maintenant été trouvé un nouveau copolymère bloc étoilé de formule générale [S₁-S₂-(B₁/S₃)-B₂]ₘ-X-[B₂-(B₁/S₃)-S₂]ₙ dans laquelle X représente un radical polyfonctionnel issu d'un agent de couplage, m et n représentent des nombres entiers non nuls tels que m + n est égal à 3 ou 4 et est également égal au degré de fonctionnalité du radical X, S₁ et S₂ représentent chacun un bloc d'un polymère d'au moins un monomère vinylaromatique, B₂ représente un bloc d'un polymère d'au moins un diène conjugué, (B₁/S₃) représente un bloc d'un copolymère statistique d'au moins un monomère vinylaromatique et d'au moins un diène conjugué, caractérisé en ce que 40 à 75 % en poids de (B₁/S₃) est constitué d'unités issues de monomère(s) vinylaromatique(s). De préférence, le copolymère bloc étoilé est tel que 45 à 70 % en poids de (B₁/S₃) est constitué d'unités issues de monomère(s) vinylaromatique(s). De manière encore préférée, le copolymère bloc étoilé est tel que plus de 50 % en poids et moins de 70 % en poids de (B₁/S₃) est constitué d'unités issues de monomère(s) vinylaromatique(s). De préférence, le copolymère bloc étoilé contient de 20 à 30 % en poids d'unités issues de diène(s) conjugué(s) (B₁ + B₂). La somme de la masse des blocs B₂ constitue plus de 40 % en poids et moins de 90 % en poids de la masse totale de diène conjugué contenue dans le copolymère bloc étoilé selon l'invention. Le copolymère de la présente invention présente une tranparence remarquable.

Un autre objet de la présente invention concerne une composition comprenant le copolymère bloc étoilé précédemment décrit et du polystyrène cristal. Cette composition présente également une transparence remarquable, et de plus présente un ensemble de propriétés mécaniques excellentes. Il a en effet pu être observé que cette composition allie à la fois une résistance aux chocs élevée, un allongement à la rupture élevé et un haut module de flexion. La combinaison de ces deux dernières propriétés est particulièrement étonnante car celles-ci sont généralement antinomiques.

De préférence, cette composition contient de 60 à 90 % en poids de copolymère bloc étoilé.

Un autre objet de la présente invention concerne un procédé de fabrication du copolymère bloc étoilé ci-dessus décrit. Dans ce qui suit, l'expression polymérisation quasi-totale ou copolymérisation quasi-totale signifie que plus de 99 % en poids des monomères introduits ont polymérisé. Le procédé selon l'invention comprend une succession d'étapes. Dans une première étape, destinée à former les blocs S₁, une première quantité de monomère vinylaromatique est anioniquement polymérisée en présence d'un catalyseur, généralement un organolithium comme le n-butyllithium. Après polymérisation quasi-totale, dans une seconde étape, on ajoute une nouvelle quantité de catalyseur et de monomère vinylaromatique de façon à former les blocs S₂ liés pour partie aux blocs S₁. Après polymérisation quasi-totale, on a donc dans le milieu de polymérisation des blocs S₁-S₂ et des blocs S₂. On procède ensuite à la troisième étape en ajoutant au milieu un mélange de monomère vinylaromatique et de diène conjugué, lesquels vont se copolymériser pour former des blocs (B₁/S₃) liés pour partie aux blocs S₂, pour partie aux blocs S₁-S₂. Après copolymérisation quasi-totale, le milieu de polymérisation contient donc des blocs S₁-S₂-(B₁/S₃) et des blocs (B₁/S₃)-S₂. On procède ensuite à la quatrième étape en ajoutant la quantité de diène conjugué destinée à former les blocs B₂ dont une partie se lie aux blocs (B₁/S₃)-S₂ pour former des blocs B₂-(B₁/S₃)-S₂ et l'autre partie se lie aux blocs S₁-S₂-(B₁/S₃) pour former des blocs S₁-S₂-(B₁/S₃)-B₂. Après polymérisation quasi-totale, on procède à la cinquième étape, consistant à ajouter au milieu un agent de couplage pour mener à un copolymère bloc étoilé selon la présente invention.

Il convient ensuite de désactiver par un agent électrophile les espèces ioniques résultant du couplage. Pour ce faire, on pourra faire réagir sur le milieu de polymérisation tout d'abord du gaz carbonique en appliquant une pression d'environ trois bars de ce gaz, puis, après retour à la pression atmosphérique, on injectera de l'eau à raison d'environ une mole d'eau par mole de catalyseur introduit dans le milieu.

On élimine ensuite le solvant par toute technique appropriée, par exemple par l'usage d'un dévolatisateur à chaud et sous vide.

Chacune de ces étapes fait appel à des techniques connues dans leur principe de l'homme du métier, leur agencement original menant aux copolymères bloc étoilés de la présente invention.

Les quantités de monomère vinylaromatique et de diène conjugué à mettre en jeu pour chaque étape de polymérisation sont à choisir en fonction de la composition recherchée pour le copolymère bloc étoilé à synthétiser, compte tenu de ce que chaque étape de polymérisation peut et doit être poussée jusqu'à polymérisation quasi-totale des monomères introduits.

Généralement, on introduit lors de la première, seconde et troisième étape, respectivement 45 à 55 % en poids, 30 à 40 % en poids et 5 à 15 % en poids de la totalité de monomère vinylaromatique nécessaire à la synthèse du copolymère. Par ailleurs, on introduit généralement lors de la troisième et quatrième étape, respectivement entre 10 et 60 % en poids et entre 90 et 40 % en poids de totalité de diène conjugué nécessaire à la synthèse du copolymère.

On peut utiliser comme catalyseur des dérivés organiques du lithium comme l'éthyllithium, le propyllithium, le butyllithium, l'amyllithium, l'hexyllitithium, le cyclohexyllithium, le phenyllithium, le tolyllithium, le naphthyllithium et leurs isomères en particulier le n-butyllithium et le sec-butyllithium.

Lors de la première et seconde étape, le catalyseur est introduit à raison de 1 à 20 millimoles par mole de monomère vinylaromatique introduit lors de la même étape.

On peut utiliser comme agent de couplage les composés comprenant des groupes fonctionnels capables de réagir avec les liaisons lithium carbanion et permettant de relier un groupe fonctionnel à une chaine carbonée.

On peut utiliser soit des agents de couplage capables d'être trifonctionnels, c'est à dire capables de générer des copolymères bloc étoilés à trois branches de sorte que m + n = 3 dans la formule générale, soit des agents de couplage capables d'être tétrafonctionnels c'est à dire capables de générer des copolymères bloc étoilés à quatre branches de sorte que m + n = 4 dans la formule générale. Les agents de couplage capables d'être tétrafonctionnels sont également généralement capables d'être trifonctionnels si on les introduit en quantité adapté compte tenu de la quantité totale de catalyseur introduite dans le milieu de polymérisation comme cela est indiqué ci-après.

On peut citer comme exemples d'agents de couplage capables d'être trifonctionnels et pas tétrafonctionnels les polybutadiènes comportant trois fonctions époxydes, l'huile de soja époxydée, les, trihalogénures métalliques tel que le méthyltrichlorosilane.

On peut citer comme exemples d'agents de couplage capables d'être tétrafonctionnels ou trifonctionnels les polybutadiènes comportant quatre fonctions époxydes, les tétrahalogénures métalliques tels que le SiCl₄, les dihalogénures d'acide, les diesters de formule générale R¹ OOC-(CH₂)ₙ-COOR² dans laquelle R¹ et R², pouvant être identiques ou différents, représentent chacun un groupe alkyl comprenant de 1 à 30 atomes de carbone et n représente un nombre entier allant de 1 à 10.

Les agents de couplage préférés sont les diesters dont la formule vient d'être indiquée, et pour lesquels R¹ et R² représentent chacun un groupe alkyl comportant de 8 à 30 atomes de carbone.

Si l'on souhaite réaliser un copolymère selon l'invention comportant trois branches, c'est àdire pour lequel m + n = 3 dans sa formule générale, on introduira, pour 3 moles de catalyseur introduites au total dans le milieu de polymérisation, 1 mole d'agent de couplage capable d'être tri- ou tétrafonctionnel. Si l'on souhaite réaliser un copolymère selon l'invention comportant quatre branches, c'est àdire pour lequel m + n = 4 dans sa formule générale, il conviendra d'introduire, pour 4 moles de catalyseur introduites au total dans le milieu de polymérisation, 1 mole d'agent de couplage capable d'être tétrafonctionnel.

De préférence, les étapes de polymérisation sont menées en présence d'un solvant organique, dont la concentration dans le milieu de polymérisation est comprise entre 10 et 40 % en poids.

Le solvant est choisi de préférence parmi les hydrocarbures aromatiques tels que le benzène, le toluène, le xylène, l'éthylbenzène, ce dernier étant particulièrement préféré.

Toute présence d'air ou humidité dans le milieu de polymérisation doit être évitée de façon à préserver l'efficacité du catalyseur.

Les étapes de polymérisation peuvent être menées entre 0 et 120°C, et de préférence entre 30 et 95°C.

Les diènes conjugués pouvant être utilisés sont ceux comportant de 4 à 8 atomes de carbone comme le 1,3-butadiène, l'isoprène, le 2,3-diméthyl-1,3-butadiène, le piperylène et leurs mélanges. le 1,3-butadiène est le diène conjugué préféré.

Par monomère vinylaromatique, on entend le styrène ainsi que les dérivés du styrène présentant un comportement de copolymérisation similaire à celui du styrène comme le styrène substitué par un groupement alkyl, en particulier sur le cycle, et l'on peut citer les méthylstyrènes, les éthylstyrènes, les tert-butylstyrènes. Le styrène est le monomère vinylaromatique préféré.

Dans les exemples, les expressions "styrène sec", "butadiène sec", "éthylbenzène sec" désignent respectivement du styrène, du butadiène ou de l'éthylbenzène fraichement dégazé par un courant d'azote et séché sur du tamis moléculaire 0,3 nm (ou 3A), de sorte que ces produits contiennent moins de 10 ppm d'eau.

Dans les exemples, les propriétés des copolymères bloc étoilés, purs ou en mélange avec du polystyrène, ont été déterminées par les techniques suivantes:
- Indice de fluidité: norme ASTM D 1238
- Taux de polybutadiène dans le copolymère bloc étoilé (sous la forme de bloc d'homopolymère ou de bloc copolymère) : résonance magnétique nucléaire du proton.
- Taux de styrène dans le bloc de copolymère styrène/butadiène (B₁/S₃) : résonance magnétique nucléaire du proton
- Point Vicat 1 kg : norme ASTM D 1525
- Résistance aux chocs: norme AFNOR NST 51-118/85
- Allongement à rupture : norme ASTM D638
- Module de flexion: norme ASTM D790
- Indice de jaune : norme ASTM D1925
- Transparence : les indices de Haze ont été déterminés à l'aide de l'appareil de marque Colorquest commercialisé par la société Hunterlab.

Dans le tableau 1, l'expression S₃/(S₃ + B₁) représente le pourcentage en poids d'unités issus du styrène contenu dans les blocs de copolymère (B₁/S₃).

Les exemples ont été réalisés à taux de polybutadiène sensiblement identique mais en faisant varier la quantité relative de butadiène dans les blocs (B₁/S₃) et B₂.

### EXEMPLE 1 (Comparatif)

On passive sous atmosphère d'azote un réacteur Inox double enveloppe de 25 litres équipé d'un agitateur double ruban et d'une régulation de température, par 8 kg d'une solution de 10⁻² mole par litre de n-butyllithium dans l'éthylbenzène. Après vidange, on charge dans ce réacteur, toujours sous atmosphère d'azote, à la température ambiante et sous agitation, 3000 grammes d'éthylbenzène sec, puis 24,4 ml d'une solution de 1,6 mole par litre de n-butyllithium dans l'hexane (soit 2,5 g de n-butyllithium).

La double enveloppe du réacteur étant parcourue par de l'eau à 25°C, on charge ensuite dans ce réacteur en environ 5 minutes, 250 grammes de styrène sec. On observe lors de cette opération, que la température à l'intérieur du réacteur monte à environ 35°C. On laisse sous agitation environ 15 minutes à la suite de quoi on introduit à débit régulier 2480 grammes de styrène sec en environ 50 minutes. La température monte alors à 70°C et l'on maintient cette température. A ce stade, on a crée un premier bloc S₁ de polystyrène. On ajoute ensuite, toutjours sous agitation et à 70°C, 97,6 ml de la solution déjà décrite de n-butyllithium dans l'hexane (soit 10 g de n-butyllithium) puis 1890 grammes de styrène sec en un débit régulier en environ 35 minutes. A ce stade, on a crée un second bloc S₂ de polystyrène en partie lié au premier bloc S₁. On introduit ensuite, toujours sous agitation, à débit régulier en environ 15 minutes un mélange constitué de 630 grammes de styrène sec et 55 grammes de 1,3-butadiène sec. On laisse la température s'élever de 70 à 90°C. A ce stade on a créé un copolymère statistique (B₁/S₃) du styrène et du 1,3-butadiène, lié pour une partie à S₂ et pour l'autre partie à S₁-S₂. On ajoute ensuite 1695 grammes de butadiène sec à débit régulier en environ 30 minutes, la température étant toujours maintenue à 90°C. A ce stade, on a créé des unités B₂-(B₁/S₃)-S₂ et B₂-(B₁/S₃)-S₂-S₁. On ajoute alors 28 grammes d'adipate de décyle en tant qu'agent de couplage commercialisé sous la marque GARBEXOL A10 par la société GREAT LAKES Chemicals, et on laisse sous agitation environ 30 minutes, la température restant maintenue à 90°C. On applique ensuite une pression de 3 bars de gaz carbonique pendant 30 minutes. On fait revenir la pression à la pression atmosphérique et l'on introduit 3,5 grammes d'eau, puis après environ 15 minutes, on introduit un mélange d'antioxydants constitué de 17,5 g de octodecyl-3-(3,5-di-tert-butyl4-hydroxyphenyl)-propionate commercialisé sous la marque IRGANOX 1076, 10,5 grammes de 2-propenoïque acide, 2-(1,1-dimethyléthyl)-6-[[3-(1,1-diméthylethyl)-2-hydroxy-5-methylphényl]methyl]-4-méthylphénylester commercialisé sous la marque IRGANOX 3052 et 70 grammes de trinonylphenylphosphite commercialisé sous la marque STAVINOR TNPA, les deux premiers antioxydants étant commercialisés par la société CIBA, le troisième l'étant par la société CECA.

Le solvant de la solution est ensuite évaporé en une seule étape flash dans un système classique constitué d'un préchauffeur tubulaire encastré dans une chambre de dévolatilisation. Cette opération est réalisée à 215°C à une pression de 700 millibars, le temps de séjour étant d'environ 20 minutes. Le copolymère bloc étoilé ainsi obtenu présente une structure conforme à la formule générale [S₁-S₂-(B₁/S₃)-B₂]ₘ-X-[B₂-(B₁/S₃)-S₂]ₙ.

Ce copolymère bloc étoilé présente une masse moléculaire moyenne en poids de 165 000, une masse moléculaire moyenne en nombre de 82 000 et une polymolécularité de 2.

Ce copolymère est ensuite granulé de façon classique et des éprouvettes sont réalisées par injection à partir de ces granulés pour la réalisation des tests mécaniques et optiques.

On réalise ensuite un mélange de ce copolymère avec du polystyrène cristal de marque LACQRENE 1340 commercialisé par la société ELF ATOCHEM S.A. Ce polystyrène cristal présente un indice de fluidité de 4 et un point vicat 1 kg de 97°C. On homogénéise des granulés du polystyrène cristal et du copolymère en des proportions massiques de 30 % et 70 % respectivement, puis l'on réalise des éprouvettes dans les conditions classiques de transformation du polystyrène vers 220°C.

Le tableau 1 rassemble les résultats.

### EXEMPLE 2

On procède comme pour l'exemple 1 sauf que le mélange de styrène et de butadiène est maintenant constitué de 630 grammes de styrène sec et 210 grammes de butadiène sec au lieu des 55 g de l'exemple 1 et sauf que l'on introduit 1540 g de butadiène sec au lieu des 1695 g de l'exemple 1 juste avant l'introduction de l'agent de couplage. Le tableau 1 rassemble les résultats. Le copolymère bloc étoilé présente une masse moléculaire moyenne en poids et en nombre et une polymolécularité semblables à celles obtenues dans l'exemple 1.

### EXEMPLE 3

On procède comme pour l'exemple 1 sauf que le mélange de styrène et de butadiène est maintenant constitué de 630 grammes de styrène sec et 324 grammes de butadiène sec au lieu des 55 g de l'exemple 1 et sauf que l'on introduit 1426 g de butadiène sec au lieu des 1695 g de l'exemple 1 juste avant l'introduction de l'agent de couplage. Le tableau 1 rassemble les résultats. Le copolymère bloc étoilé présente une masse moléculaire moyenne en poids et en nombre et une polymolécularité semblables à celles obtenues dans l'exemple 1.

### EXEMPLE 4

On procède comme pour l'exemple 1 sauf que le mélange de styrène et de butadiène est maintenant constitué de 630 grammes de styrène sec et 625 grammes de butadiène sec au lieu des 55 g de l'exemple 1 et sauf que l'on introduit 1120 g de butadiène sec au lieu des 1695 g de l'exemple 1 juste avant l'introduction de l'agent de couplage. Le tableau 1 rassemble les résultats. Le copolymère bloc étoilé présente une masse moléculaire moyenne en poids et en nombre et une polymolécularité semblables à celles obtenues dans l'exemple 1.

### EXEMPLE 5

On procède comme pour l'exemple 1 sauf que le mélange de styrène et de butadiène est maintenant constitué de 630 grammes de styrène sec et 945 grammes de butadiène sec au lieu des 55 g de l'exemple 1 et sauf que l'on introduit 805 g de butadiène sec au lieu des 1695 g de l'exemple 1 juste avant l'introduction de l'agent de couplage. Le tableau 1 rassemble les résultats. Le copolymère bloc étoilé présente une masse moléculaire moyenne en poids et en nombre et une polymolécularité semblables à celles obtenues dans l'exemple 1.

### EXEMPLE 6 (Comparatif)

On procède comme pour l'exemple 1 sauf que le mélange de styrène et de butadiène est maintenant constitué de 630 grammes de styrène sec et 1620 grammes de butadiène sec au lieu des 55 g de l'exemple 1 et sauf que l'on introduit 130 g de butadiène sec au lieu des 1695 g de l'exemple 1 juste avant l'introduction de l'agent de couplage. Le tableau 1 rassemble les résultats. Le copolymère bloc étoilé présente une masse moléculaire moyenne en poids et en nombre et une polymolécularité semblables à celles obtenues dans l'exemple 1.

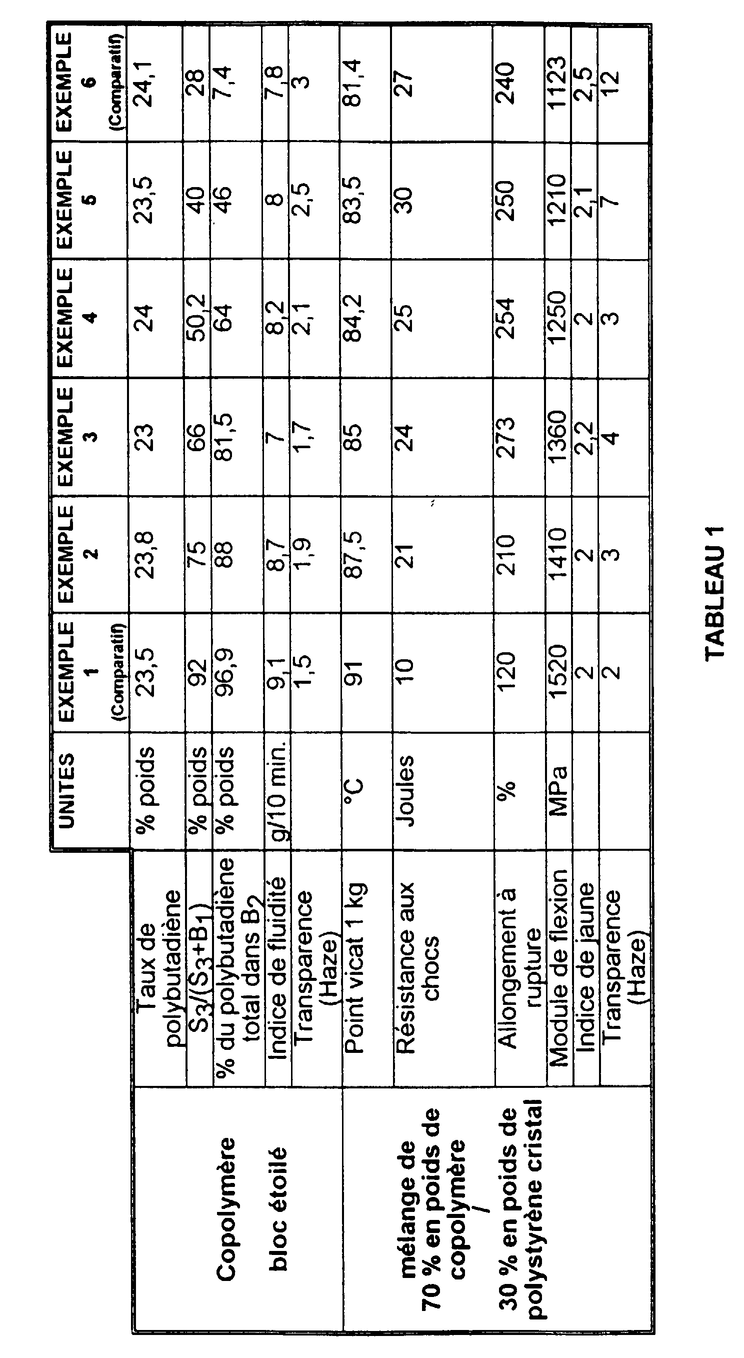

## Revendications

1. Copolymère bloc étoilé de formule générale [S₁-S₂-(B₁/S₃)-B₂]ₘ-X-[B₂-(B₁/S₃)-S₂]ₙ dans laquelle X représente un radical polyfonctionnel issue d'un agent de couplage, m et n représentent des nombres entiers non nuls tels que m + n est égal à 3 ou 4 et est également égal au degré de fonctionnalité du radical X, S₁ et S₂ représentent chacun un bloc d'un polymère d'au moins un monomère vinylaromatique, B₂ représente un bloc d'un polymère d'au moins un diène conjugué, (B₁/S₃) représente un bloc d'un copolymère statistique d'au moins un monomère vinylaromatique et d'au moins un diène conjugué, 40 à 75 % en poids de (B₁/S₃) étant constitué d'unités issues de monomère vinylaromatique, caractérisé en ce que la somme de la masse des blocs B2 constitue plus de 40 % en poids et moins de 90 % en poids de la masse totale de diène conjugué contenue dans ledit copolymère bloc étoilé.

2. Copolymère bloc étoilé selon la revendication 1 caractérisé en ce que 45 à 70 % en poids de (B₁/S₃) est constitué d'unités issues de monomère vinylaromatique.

3. Copolymère bloc étoilé selon la revendication 1 ou 2 caractérisé en ce que plus de 50 % en poids et moins de 70 % en poids de (B₁/S₃) est constitué d'unités issues de monomère vinylaromatique.

4. Copolymère bloc étoilé selon l'une des revendications 1 à 3 caractérisé en ce que l'agent de couplage est choisi parmi les diesters de formule générale R¹OOC-(CH₂)ₙ-COOR² dans laquelle R¹ et R² représentent chacun un groupe alkyl comportant de 8 à 30 atomes de carbone et n représente un nombre entier allant de 1 à 10.

5. Copolymère bloc étoilé selon l'une des revendications 1 à 4 caractérisé en ce qu'il contient de 20 à 30 % en poids d'unités issues de diène conjugué.

6. Copolymère bloc étoilé selon l'une des revendications 1 à 5 caractérisé en ce que le styrène est le seul monomère vinylaromatique.

7. Copolymère bloc étoilé selon l'une des revendications 1 à 6 caractérisé en ce que le 1,3-butadiène est le seul diène conjugué.

8. Composition comprenant un copolymère bloc étoilé de l'une des revendications 1 à 7 et du polystyrène cristal.

9. Composition selon la revendication 8 caractérisée en ce qu'elle comprend de 60 à 90 % en poids de copolymère bloc étoilé.

10. Procédé de préparation d'un copolymère bloc étoilé conforme à l'une des revendications 1 à 9 caractérisé en ce qu'il comprend les étapes suivantes :
a) polymérisation anionique quasi-totale d'une première quantité d'au moins un monomère vinylaromatique en présence d'un catalyseur, puis
b) polymérisation anionique quasi-totale d'une seconde quantité d'au moins un monomère vinylaromatique en présence d'un catalyseur, puis
c) copolymérisation anionique quasi-totale d'un mélange d'au moins un monomère vinylaromatique et d'au moins un diène conjugué, puis
d) polymérisation anionique d'au moins un diène conjugué, puis
e) ajout d'un agent de couplage.

11. Procédé selon la revendication 10 caractérisé en ce que l'on introduit lors des étapes a), b) et c) respectivement 45 à 55 % en poids, 30 à 40 % en poids, 5 à 15 % en poids de la totalité de monomère vinylaromatique nécessaire à la synthèse du copolymère bloc étoilé, et en ce que l'on introduit lors des étapes c) et d) respectivement entre 10 et 60 % en poids et entre 90 et 40 % en poids de la totalité de diène conjugué nécessaire à la synthèse du copolymère bloc étoilé.

12. Procédé selon la revendication 10 ou 11 caractérisé en ce que les étapes a) à e) sont menées en présence d'un solvant organique dont la concentration est comprise entre 10 et 40 % en poids.

13. Procédé selon la revendication 12 caractérisé en ce que le solvant organique est l'éthylbenzène.

14. Procédé selon l'une des revendications 10 à 13 caractérisé en ce que les étapes a) à e) sont réalisées entre 0 et 120°C.

15. Procédé selon l'une des revendications 10 à 14 caractérisé en ce que les étapes a) à e) sont réalisées entre 30 et 95°C.

## Patentansprüche

1. Sternförmiges Blockcopolymer der allgemeinen Formel
[S₁-S₂-(B₁/S₃)-B₂]ₘ-X-[B₂-(B₁/S₃)-S₂]ₙ
in der X einen aus einem Kupplungsreagenz stammenden polyfunktionellen Rest darstellt, m und n ganze Zahlen ungleich Null darstellen, wie z.B. m + n ist gleich 3 oder 4, was dem Funktionalitätsgrad des Restes X entspricht, S₁ und S₂ jeweils einen Polymerblock mindestens eines vinylaromatischen Polymers darstellen, B₂ einen Polymerblock mindestens eines konjugierten Diens darstellt und (B₁/S₃) einen Block eines statistischen Copolymers mindestens eines vinylaromatischen Monomers und mindestens eines konjugierten Diens darstellt, wobei 40 bis 75 Gew.-% von (B₁/S₃) aus von einem vinylaromatischen Monomer abgeleiteten Einheiten bestehen, dadurch gekennzeichnet, daß die Summe der Masse der Blöcke B₂ mehr als 40 Gew.-% und weniger als 90 Gew.-% der Gesamtmasse des konjugierten Diens darstellt, die in dem sternförmigen Blockcopolymer enthalten ist.

2. Sternförmiges Blockcopolymer nach Anspruch 1, dadurch gekennzeichnet, daß 45 bis 70 Gew.-% and (B₁/S₃) aus Einheiten bestehen, die sich von dem vinylaromatischen Monomer ableiten.

3. Sternförmiges Blockcopolymer nach Anspruch 1 oder 2, dadurch gekennzeichnet, daß mehr als 50 Gew.-% und weniger als 70 Gew.-% an (B₁/S₃) aus Einheiten bestehen, die sich von dem vinylaromatischen Monomer ableiten.

4. Sternförmiges Blockcopolymer nach einem der Ansprüche 1 bis 3, dadurch gekennzeichnet, daß das Kupplungsreagenz aus Diestern der allgemeinen Formel
R¹OOC-(CH₂)ₙ-COOR²
ausgewählt sind, in der R¹ und R² jeweils eine Alkylgruppe mit 8 bis 30 Kohlenstoffatomen darstellen und n eine ganze Zahl von 1 bis 10 darstellt.

5. Sternförmiges Blockcopolymer nach einem der Ansprüche 1 bis 4, dadurch gekennzeichnet, daß es 20 bis 30 Gew.-% an Einheiten enthält, die sich von einem konjugierten Dien ableiten.

6. Sternförmiges Blockcopolymer nach einem der Ansprüche 1 bis 5, dadurch gekennzeichnet, daß das Styrol das einzige vinylaromatische Monomer ist.

7. Sternförmiges Blockcopolymer nach einem der Ansprüche 1 bis 6, dadurch gekennzeichnet, daß das 1,3-Butadien das einzige konjugierte Dien ist.

8. Zusammensetzung, enthaltend ein sternförmiges Blockcopolymer nach einem der Ansprüche 1 bis 7 und kristallines Polystyrol.

9. Zusammensetzung nach Anspruch 8, dadurch gekennzeichnet, daß sie 60 bis 90 Gew.-% des sternförmigen Blockcopolymers enthält.

10. Verfahren zur Herstellung eines sternförmigen Blockcopolymers nach einem der Ansprüche 1 bis 9, dadurch gekennzeichnet, daß es die folgenden Verfahrensschritte umfaßt:
a) nahezu vollständige anionische Polymerisation einer ersten Menge mindestens eines vinylaromatischen Monomers in Gegenwart eines Katalysators, anschließend
b) nahezu vollständige anionische Polymerisation einer zweiten Menge mindestens eines vinylaromatischen Monomers in Gegenwart eines Katalysators, anschließend
c) nahezu vollständige anionische Polymerisation einer Mischung aus mindestens einem vinylaromatischen Monomer und mindestens einem konjugierten Dien, anschließend
d) anionische Polymerisation mindestens eines konjugierten Diens, anschließend
e) Zugabe eines Kupplungsreagenzes.

11. Verfahren nach Anspruch 10, dadurch gekennzeichnet, daß man bei den Arbeitsschritten a), b) bzw. c) 45 bis 55 Gew.-%, 30 bis 40 Gew.-% bzw. 5 bis 15 Gew.-% der Gesamtheit des für die Synthese des sternförmigen Blockcopolymers erforderlichen vinylaromatischen Monomers hinzugibt und daß man in den Arbeitsschritten c) bzw. d) 10 bis 60 Gew.-% bzw. 90 bis 40 Gew.-% der Gesamtheit des für die Synthese des sternförmigen Blockcopolymers erforderlichen konjugierten Diens hinzugibt.

12. Verfahren nach Anspruch 10 oder 11, dadurch gekennzeichnet, daß die Arbeitsschritte a) bis e) in Gegenwart eines organischen Lösungsmittels durchgeführt werden, dessen Konzentration im Bereich zwischen 10 und 40 Gew.-% liegt.

13. Verfahren nach Anspruch 12, dadurch gekennzeichnet, daß das organische Lösungsmittel Benzol ist.

14. Verfahren nach einem der Ansprüche 10 bis 13, dadurch gekennzeichnet, daß die Arbeitsschritte a) bis e) bei 0 °C bis 120 °C durchgeführt werden.

15. Verfahren nach einem der Ansprüche 10 bis 14, dadurch gekennzeichnet, daß die Arbeitsschritte a) bis e) bei 30 °C bis 95 °C durchgeführt werden.

## Claims

1. Star block copolymer of general formula [S₁-S₂-(B₁/S₃)-B₂]ₘ-X-[B₂-(B₁/S₃)-S₂]ₙ in which X represents a polyfunctional radical resulting from a coupling agent, m and n represent non-zero integers such that m + n is equal to 3 or 4 and is also equal to the degree of functionality of the radical X, S₁ and S₂ each represent a block of a polymer containing at least one vinylaromatic monomer, B₂ represents a block of a polymer containing at least one conjugated diene, (B₁/S₃)represents a block of a statistical copolymer containing at least one vinylaromatic monomer and at least one conjugated diene, 40 to 75% by weight of (B₁/S₃) consisting of units resulting from vinylaromatic monomer, characterized in that the sum of the mass of the blocks B₂ constitutes more than 40% by weight and less than 90% by weight of the total mass of conjugated diene contained in the said star block copolymer.

2. Star block copolymer according to Claim 1, characterized in that 45 to 70% by weight of (B₁/S₃) consists of units resulting from vinylaromatic monomer.

3. Star block copolymer according to Claim 1 or 2, characterized in that more than 50% by weight and less than 70% by weight of (B₁/S₃)consists of units resulting from vinylaromatic monomer.

4. Star block copolymer according to one of Claims 1 to 3, characterized in that the coupling agent is chosen from diesters of general formula R¹OOC-(CH₂)ₙ-COOR² in which R¹ and R² each represent an alkyl group containing from 8 to 30 carbon atoms and n represents an integer ranging from 1 to 10.

5. Star block copolymer according to one of Claims 1 to 4, characterized in that it contains from 20 to 30% by weight of units resulting from conjugated diene.

6. Star block copolymer according to one of Claims 1 to 5, characterized in that styrene is the only vinylaromatic monomer.

7. Star block copolymer according to one of Claims 1 to 6, characterized in that 1,3-butadiene is the only conjugated diene.

8. Composition comprising a star block copolymer of one of Claims 1 to 7 and crystal polystyrene.

9. Composition according to Claim 8, characterized in that it comprises from 60 to 90% by weight of star block copolymer.

10. Process for the preparation of a star block copolymer in accordance with one of Claims 1 to 9, characterized in that it comprises the following stages:
a) virtually complete anionic polymerization of a first amount of at least one vinylaromatic monomer in the presence of a catalyst, then
b) virtually complete anionic polymerization of a second amount of at least one vinylaromatic monomer in the presence of a catalyst, then
c) virtually complete anionic copolymerization of a mixture of at least one vinylaromatic monomer and of at least one conjugated diene, then
d) anionic polymerization of at least one conjugated diene, then
e) addition of a coupling agent.

11. Process according to Claim 10, characterized in that 45 to 55% by weight, 30 to 40% by weight and 5 to 15% by weight of all the vinylaromatic monomer necessary for the synthesis of the star block copolymer are introduced during Stages a), b) and c) respectively and in that between 10 and 60% by weight and between 90 and 40% by weight of all the conjugated diene necessary for the synthesis of the star block copolymer are introduced during Stages c) and d) respectively.

12. Process according to Claim 10 or 11, characterized in that Stages a) to e) are carried out in the presence of an organic solvent, the concentration of which is between 10 and 40% by weight.

13. Process according to Claim 12, characterized in that the organic solvent is ethylbenzene.

14. Process according to one of Claims 10 to 13, characterized in that Stages a) to e) are carried out between 0 and 120°C.

15. Process according to one of Claims 10 to 14, characterized in that Stages a) to e) are carried out between 30 and 95°C.
